# EUROPÄISCHE PATENTSCHRIFT

(11) **EP 1 358 787 B1**
(45) Veröffentlichungstag und Bekanntmachung des Hinweises auf die Patenterteilung: **02.02.2005**
(21) Anmeldenummer: 03009485.8
(22) Anmeldetag: 26.04.2003
(51) Int. Cl.: A01D 34/73

(54) **Schneidkopf für eine motorbetriebene Vorrichtung zum Schneiden von Pflanzen**
Cutting head for a motorized apparatus to cut plants
Tête de coupe pour un dispositif motorisé de coupe de végétation

(30) Priorität: 29.04.2002 DE 10219181
(43) Veröffentlichungstag der Anmeldung: 05.11.2003
(73) Patentinhaber: MOGATEC Moderne Gartentechnik GmbH, 09435 Venusberg, OT Griessbach (DE)
(72) Erfinder: Franz, Reinhard, 09427 Ehrenfriedersdorf (DE); Uhlig, Rolf, 09149 Thum (DE); Vierig, Matthias, 09427 Ehrenfriedersdorf (DE)
(74) Vertreter: Neumann, Steffen

(56) Entgegenhaltungen:
- EP-A- 0 676 126
- US-A1- 2002 029 483

## Beschreibung

Die Erfindung betrifft einen Schneidkopf für eine motorbetriebene Vorrichtung zum Schneiden von Pflanzen, bestehend aus einem Gehäuse mit einer Fadennachstellvorrichtung und einer im Gehäuse angeordneten und von einer Achse getragenen Fadenspule, von der sich mindestens ein Schneidfaden durch eine radiale Öffnung des Gehäuses nach außen erstreckt, und am Gehäuse ein Verschlussdeckel abnehmbar befestigt ist.

Derartige Schneidköpfe kommen als Werkzeuge an handgeführten Vorrichtungen zum Einsatz, die auch als Fadenschneider, Rasentrimmer, Kantenschneider und Freischneider bezeichnet werden und bei der Landschafts- und Gartenpflege zunehmend Verwendung finden, um insbesondere Pflanzen (= Schnittgut) an Standorten schneiden zu können, die mit herkömmlichen Geräten (z.B. Rasenmähern) schlecht zugänglich sind oder deren Anwendung sich aufgrund der Flächengröße nicht lohnt.

Ein solcher gattungsgemäßer Schneidkopf für einen Fadenschneider ist aus der DE 298 02 832 U1 bekannt.
Dieser Schneidkopf ist mit einer Spule mit zwei aus Kunststoff bestehenden Schneidfäden (Zweifadentechnik) ausgestattet, die mit hoher Drehzahl um eine Achse rotieren. Dabei erfolgt die axiale Lagesicherung der konzentrisch im Gehäuse aufgenommenen Fadenspule durch den Verschlussdeckel derart, dass dieser durch zwei federnde Haltezungen in kongruenten Durchbrüchen in der Wandung des Gehäuses gehalten wird.
Der durch den Kontakt mit dem pflanzlichen Schnittgut, Untergrund o.a. einhergehende und durch Verschleiß eintretende Verlust an Fadenlänge wird durch eine fliehkraftabhängige Nachstellung kompensiert. Dazu ist die Fadennachstellvorrichtung aus einem im Gehäuse gelagerten sowie einen kurzen Hebelarm und einen langen Hebelarm aufweisenden Schwenkhebel, jeweils an den Hebelarmen ausgestalteten Vorsprüngen, die eine solche Höhe und geometrische Kontur aufweisen, dass diese in Einbaulage mit an der zugeordneten Seite der Fadenspule angeordneten Vorsprüngen in Wirkverbindung bringbar sind, wobei der auf dem kurzen Hebelarm angeordnete Vorsprung als Sperrelement ausgestaltet ist, dem in Arretierlage ein auf der Spule angeordneter Arretierstift zugeordnet ist, während der auf dem langen Hebelarm angeordnete Vorsprung als Schaltelement ausgestaltet ist, das sowohl von einem Anschlagstift als auch von einem Arretierstift beaufschlagbar ist.

Dieser Schneidkopf ist ohne weiteres in der Lage die Anforderungen zum Schneiden von Pflanzen zu erfüllen, soweit es sich um Schnittgut, beispielsweise Gräser und Halme, handelt, welche eine geringe Querschnittsfläche und/oder eine geringe Festigkeit aufweisen und somit auch nur vergleichsweise niedrige Schnittkräfte erfordern. Weist das Schnittgut jedoch eine größere Querschnittsfläche und/oder eine erhöhte Festigkeit, wie z.B. Disteln oder Nesselgewächse, auf, erlaubt der flexible Schneidfaden keinen erfolgreichen Schnitt, und unterliegt dabei außerdem einem übermäßigen Verschleiß. Um derartiges Schnittgut einem Schneidvorgang unterziehen zu können ist es deshalb regelmäßig erforderlich, artfremde Schneidegeräte - z.B. Gartenscheren oder Mähbalken - einzusetzen, die nicht immer zur Verfügung stehen und außerdem einen erhöhten Aufwand erfordern.

Gegenstand der vorliegenden Erfindung ist ein Schneidkopf, mit dem im Bedarfsfall Schnittgut unterschiedlicher Art, hinsichtlich Querschnitt und/oder Festigkeit, mittels ein und derselben Vorrichtung und damit ohne das Erfordernis von artfremden Vorrichtungen, einem erfolgreichen Schneidvorgang unterzogen, ein erhöhter Verschleiß verhindert werden und die Umrüstung des Schneidkopfes auf die neuen Anforderungen auf einfachste Art und Weise sowie ohne Änderungen an dessen Gehäuse erfolgen kann.

Diese Aufgabe wird bei einem gattungsgemäßen Schneidkopf durch die kennzeichnenden Merkmale des Patentanspruchs 1 gelöst.

Die Vorteile der Erfindung bestehen darin, dass ein Schneidkopf zur Verfügung gestellt wird, der sich ohne jegliche Änderungen am Gehäuse und auf einfachste Weise an die unterschiedlichen Erfordernisse beim Schneiden von Pflanzen anpassen lässt, wobei über Schnappverbindungen das jeweils optimale Schneidwerkzeug (Schneidfaden oder Scheibe mit Schneidmessern) lagegesichert befestigt und somit auf die Verwendung artfremder Schneidvorrichtungen verzichtet werden kann.

Vorteilhafte Weiterbildungen der Erfindung sind aus Patentansprüchen 2 bis 6 ersichtlich.

Durch die Merkmale der Patentansprüche 2 und 3 wird eine sichere Fixierung der Scheibe am Gehäuse erreicht.

Die Ausgestaltung nach Patentanspruch 4 bewirkt, dass einerseits die hohle Nabe der Scheibe das Gehäuse übergreifen kann und andererseits die Haltezungen der Nabe die Scheibe zusätzlich von innen her gegenüber dem Gehäuse verriegeln, wodurch ein Lösen der Scheibe beim Betrieb der Vorrichtung wirksam ausgeschlossen ist.

Das Merkmal des Patentanspruchs 5 ermöglicht, dass leichte und kostengünstige Schneidmesser zum Einsatz kommen können.

Letztlich lässt sich durch die Merkmale des Patentanspruchs 6 absichern, dass zur Vermeidung von Unwuchten, der lediglich für die Fadennachstellvorrichtung des Fadenschneiders erforderliche Schwenkhebel seine angestammte Lage auch bei Verwendung der Scheibe mit den Schneidmessern beibehalten kann.

Die Erfindung soll nachfolgend an einem Ausführungsbeispiel und zugehörigen Zeichnungen näher erläutert werden. Es zeigen:
- Fig. 1: den grundsätzlichen Aufbau einer motorbetriebenen Vorrichtung zum Schneiden von Pflanzen mit Schneidkopf
- Fig. 2: eine vereinfachte Explosivdarstellung des erfindungsgemäßen Schneidkopfes mit Schneidfaden
- Fig. 3: eine vereinfachte Explosivdarstellung des erfindungsgemäßen Schneidkopfes mit einer die Schneidmesser tragenden Scheibe
- Fig. 4: eine Schnittdarstellung des erfindungsgemäßen Schneidkopfes (Gehäuse mit Scheibe) in montiertem Zustand

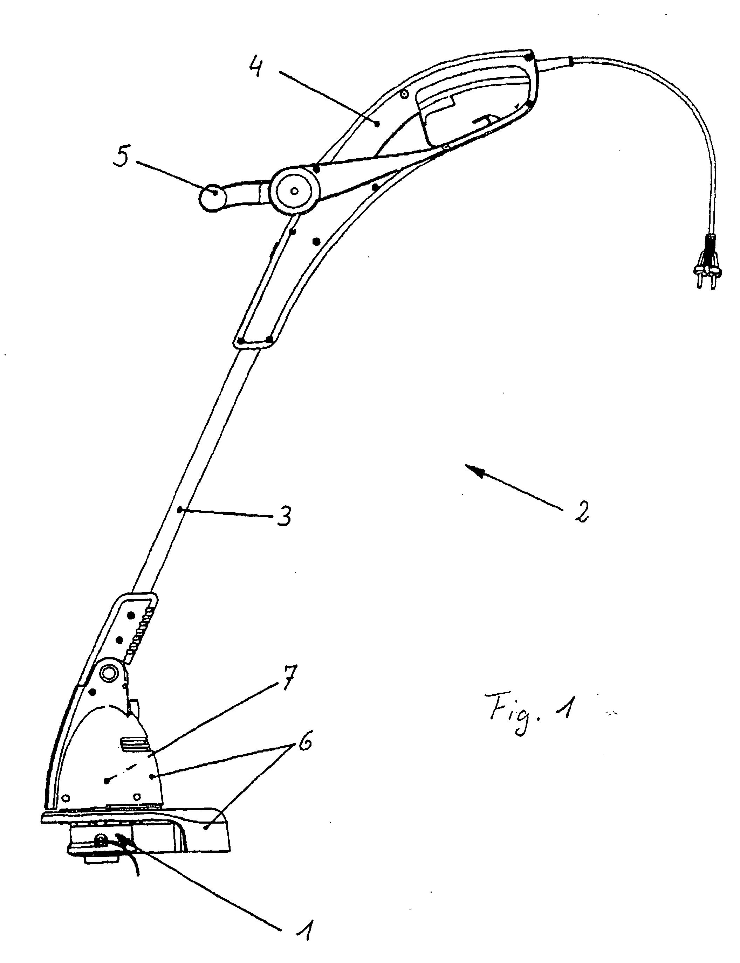

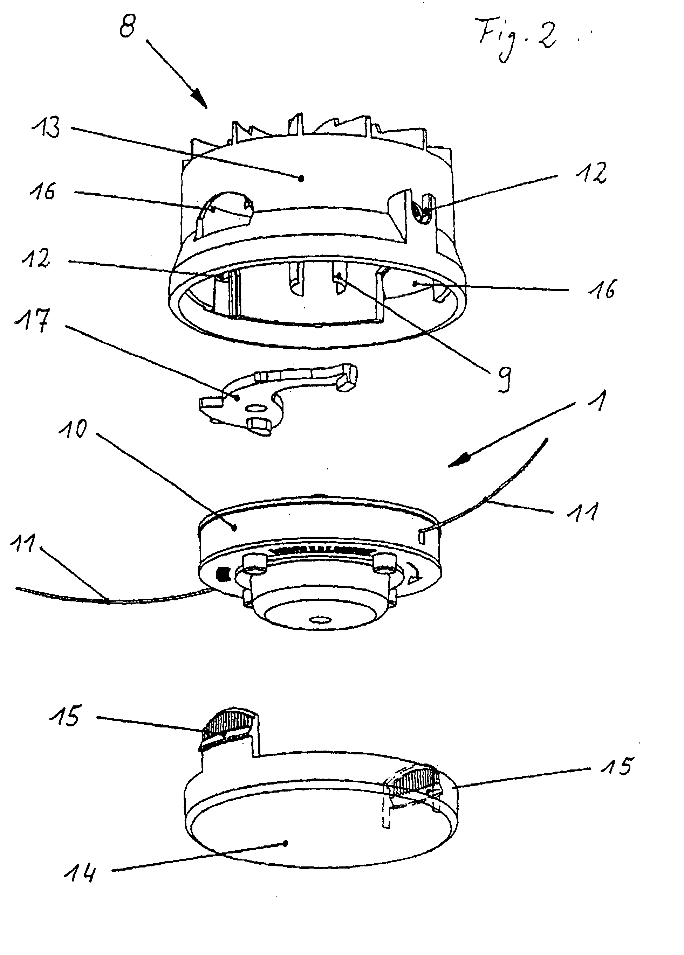

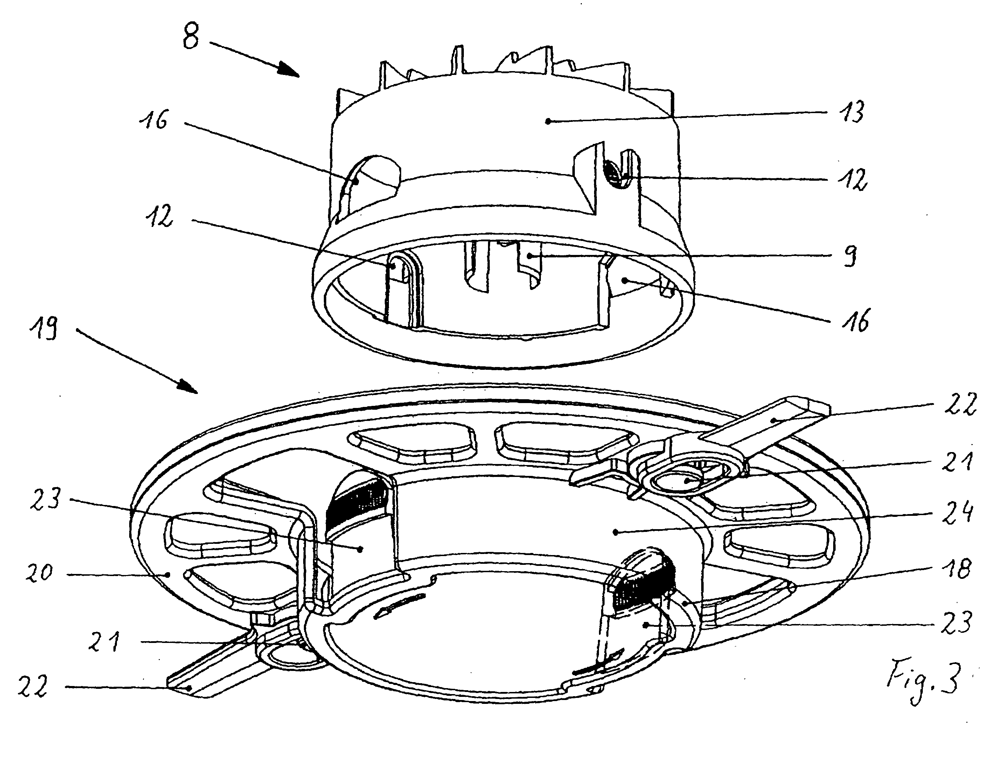

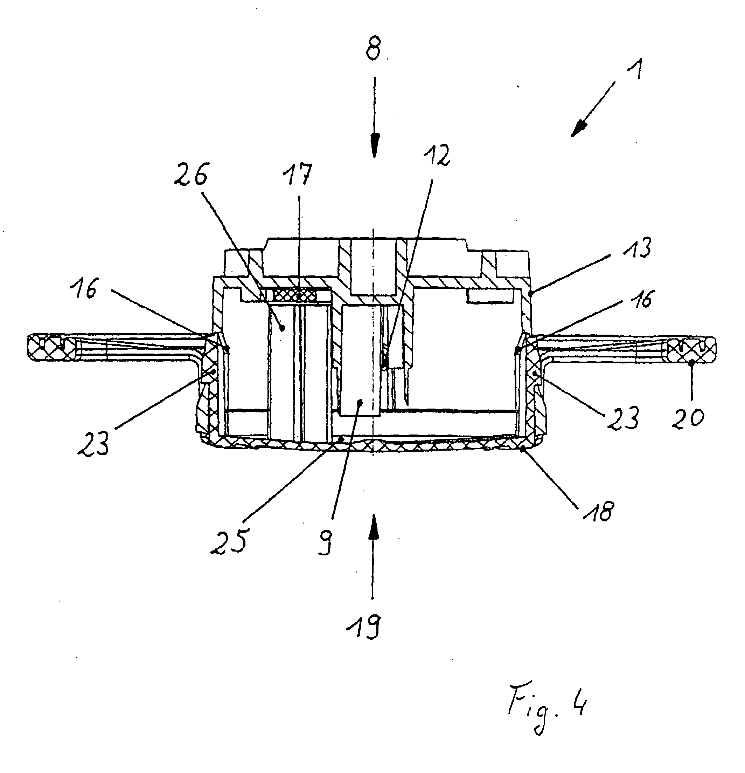

Der in der Fig. 1 ist ein motorisch angetriebener Schneidkopf 1 dargestellt. Dieser ist an dem einen Ende einer insgesamt als Fadenschneider 2 bezeichneten Vorrichtung angeordnet, die im Wesentlichen aus einer Führungsstange 3 mit zwei Handgriffen 4, 5 und einem Motorgehäuse 6 mit einer Schutzabdeckung besteht, wobei der Schneidkopf 1 über einen Schalter von einem Antriebsmotor 7, vorzugsweise Elektromotor, in Rotation versetzt wird. Gemäß Fig. 2 besteht der Schneidkopf 1 aus einem Gehäuse 8, einer Fadennachstellvorrichtung und einer im Gehäuse 8 angeordneten und von einer Achse 9 getragenen Fadenspule 10, von der sich zwei Fäden 11 durch jeweils eine radiale Öffnung 12 nach außen erstrecken, wobei diese Öffnungen 12 auf einander gegenüberliegenden Seiten in der Wandung 13 des Gehäuses 8 vorgesehen sind. Mittels eines Verschlussdeckels 14 ist das Gehäuse 8 verschließbar, wobei zwei federnde Haltezungen 15 des Verschlussdeckels 14 in kongruente Durchbrüche 16 in der Wandung 13 des Gehäuses 8 eingreifen, so dass sowohl die Fadenspule 10 und der mit Vorsprüngen (nicht dargestellt) an der Fadenspule 10 zusammenwirkende Schwenkhebel 17 der Fadenachstellvorrichtung eine axiale Lagesicherung erfahren (siehe auch Fig. 4).
Ändert sich während der Schneidarbeiten der oben beschriebene Charakter des Schnittgutes, so wird nach Stromlosschaltung des Fadenschneiders 2 die Abnahme des Verschlussdeckels 14 durch Eindrücken seiner federnden Haltezungen 15 und damit dessen Formschluss zu den Durchbrüchen 16 im Gehäuse 8 gelöst, wodurch auch die Fadenspule 10 aus dem Gehäuse 8 entfernbar ist. Diese Bauteile werden mit Bezug auf die Fig. 3 nunmehr durch eine, eine Nabe 18 beinhaltende Scheibe 19 mit zwei an deren Unterseite 20 vorgesehenen und radial gegenüberliegend angeordneten sowie jeweils um einen Achsbolzen 21 schwenkbeweglich gelagerten Schneidmessern 22 aus Kunststoff ausgetauscht. Dabei ist die Nabe 18 ihrerseits mit sich axial erstreckenden und federnden Haltezungen 23 versehen, die wiederum in den kongruenten Durchbrüchen 16 in der Wandung 13 des Gehäuses 8 formschlüssig eingreifbar ausgestaltet sind. Außerdem sind die Haltezungen 23 der Nabe 18 gegenüber deren Mantelfläche 24 radial eingerückt angeordnet. Letztlich weist die hohl ausgebildete Nabe 18 auf ihrer Innenseite 25 mindestens zwei axial verlaufende Fixierelemente 26 auf, durch welche der Schwenkhebel 17 in einer vorbestimmten Lage gehalten werden kann, und zwar unabhängig davon, in welcher Lage die Scheibe 19 am Gehäuse 8 befestigt wird. Die derartige Zusammenstellung des aus Gehäuse 8 und Scheibe 19 gebildeten Schneidkopfes 1 ist in der Fig. 4 wiedergegeben. Daraus ist insbesondere ersichtlich, dass einerseits die hohl ausgestaltete Nabe 18 das Gehäuse 8 übergreift und andererseits die eingerückten Haltezungen 23 der Nabe 18 die Scheibe 19 zusätzlich von innen her gegenüber dem Gehäuse 8 durch Formschluss verriegeln.

### Bezugszeichenliste

- 1: Schneidkopf
- 2: Fadenschneider
- 3: Führungsstange
- 4: Handgriff
- 5: Handgriff
- 6: Motorgehäuse mit Schutzabdeckung
- 7: Antriebsmotor
- 8: Gehäuse
- 9: Achse
- 10: Fadenspule
- 11: Schneidfaden
- 12: Öffnung
- 13: Wandung
- 14: Verschlussdeckel
- 15: Haltezungen
- 16: Durchbruch
- 17: Schwenkhebel
- 18: Nabe
- 19: Scheibe
- 20: Unterseite
- 21: Achsbolzen
- 22: Schneidmesser
- 23: Haltezungen
- 24: Mantelfläche
- 25: Innenseite
- 26: Fixierelement

## Patentansprüche

1. Schneidkopf (1) für eine motorbetriebene Vorrichtung zum Schneiden von Pflanzen, bestehend aus einem Gehäuse (8) mit einer Fadennachstellvorrichtung und einer im Gehäuse angeordneten und von einer Achse (9) getragenen Fadenspule (10), von der sich mindestens ein Schneidfaden durch eine radiale Öffnung (12) des Gehäuses nach außen erstreckt, und am Gehäuse ein Verschlussdeckel abnehmbar befestigt ist,
**dadurch gekennzeichnet,**
**dass** am Gehäuse (8) anstelle des Verschlussdeckels (14) und der Fadenspule (10) eine, eine Nabe (18) beinhaltende Scheibe (19) mit an deren Unterseite (20) vorgesehenen und radial gegenüberliegend angeordneten sowie um jeweils einen Achsbolzen (21) schwenkbeweglich gelagerten Schneidmessern (22) austauschbar vorgesehen ist.

2. Schneidkopf für eine motorbetriebene Vorrichtung zum Schneiden von Pflanzen nach Patentanspruch 1,
**dadurch gekennzeichnet,**
**dass** die Nabe (18) sich axial erstreckende Haltezungen (23) aufweist, die in Durchbrüchen (16) in der Wandung (13) des Gehäuses (8) eingreifbar ausgestaltet sind.

3. Schneidkopf für eine motorbetriebene Vorrichtung zum Schneiden von Pflanzen nach Patentanspruch 2,
**dadurch gekennzeichnet,**
**dass** die Haltezungen (23) der Nabe (18) in kongruenten Durchbrüchen (16) in der Wandung (13) des Gehäuses (8) und damit formschlüssig eingreifbar ausgebildet sind.

4. Schneidkopf für eine motorbetriebene Vorrichtung zum Schneiden von Pflanzen nach Patentanspruch 2,
**dadurch gekennzeichnet,**
**dass** die Nabe (18) hohl ausgestaltet und deren Haltezungen (23) gegenüber der Mantelfläche (24) der Nabe (18) radial eingerückt ausgestaltet sind.

5. Schneidkopf für eine motorbetriebene Vorrichtung zum Schneiden von Pflanzen nach Patentanspruch 1,
**dadurch gekennzeichnet,**
**dass** die Schneidmesser (22) aus Kunststoff bestehend ausgebildet sind.

6. Schneidkopf für eine motorbetriebene Vorrichtung zum Schneiden von Pflanzen nach Patentanspruch 1,
**dadurch gekennzeichnet,**
**dass** die Nabe (18) auf Ihrer Innenseite (25) mindestens zwei axial verlaufende Fixierelemente (26) aufweist.

## Claims

1. A cutting head (1) for a motorized apparatus to cut plants,
consisting of a housing (8) with a wire adjustment assembly and a wire reel (10) arranged within the housing and mounted on an axle (9), with at least one cutting wire running toward the outside through a radial opening (12) of the housing and a lid being detachably mounted on said housing,
**characterized in that**,
instead of the lid (14) and the wire reel (10), a replaceable disk (19) including a hub (18), is provided on the housing (8), whereas said disk is equipped on its bottom (20) with radially opposite cutting blades (22) that are each pivoted to swivel around an axle pin (21).

2. The cutting head for a motorized apparatus to cut plants according to claim 1,
**characterized in that**
the hub (18) comprises holding tongues (23) running in axial direction that are designed to engage in recesses (16) in the wall (13) of the housing (8).

3. The cutting head for a motorized apparatus to cut plants according to claim 2,
**characterized in that**
the holding tongues (23) of the hub (18) are designed to fit into congruent recesses (16) in the wall (13) of the housing (8), thereby providing positive locking.

4. The cutting head for a motorized apparatus to cut plants according to claim 2,
**characterized in that**
the hub (18) is hollow and its holding tongues (23) are inwardly offset in radial direction from the lateral area (24) of the hub (18).

5. The cutting head for a motorized apparatus to cut plants according to claim 1,
**characterized in that**
the cutting blades (22) are made of a synthetic material.

6. The cutting head for a motorized apparatus to cut plants according to claim 1,
**characterized in that**
the hub (18) comprises at least two fixing elements (26) on its inner side (25) that run in axial direction.

## Revendications

1. Tête de coupe (1) pour un dispositif motorisé de coupe de végétation, composée d'un boîtier (8) avec dispositif de réglage du fil et d'une bobine (10) placée sur un arbre (9), d'où au moins un fil de coupe est conduit par un orifice radial (12) du boîtier vers l'extérieur et où un couvercle amovible est fixé au boîtier, **caractérisée par le fait que** sur le boîtier (8) est prévu, au lieu du couvercle (14) et de la bobine (10), un disque (19) remplaçable qui est muni d'un moyeu (18), et que des lames (22) qui tournent sur palier autour d'un boulant- pivot (21) sont radialement disposées de forme opposée et amovible à la face inférieure (20) du disque.

2. Tête de coupe pour un dispositif motorisé de coupe de végétation selon la revendication 1, **caractérisée par le fait**
**que** le moyeu (18) présente des languettes de fixation (23) disposées en sens axial qui se trouvent dans des trous de passage (16) situés dans la paroi (13) du boîtier (8) et qui sont dotées d'engrènements.

3. Tête de coupe pour un dispositif motorisé de coupe de végétation selon la revendication 2, **caractérisée par le fait**
**que** les languettes de fixation (23) du moyeu (18) sont disposées dans des trous de passage congrus (16) et qu'elles sont munies d'engrènements à engagement positif.

4. Tête de coupe pour un dispositif motorisé de coupe de végétation selon la revendication 2, **caractérisée par le fait**
**que** le moyeu (18) est creux, que ses languettes de fixation (23) sont disposées en face de la surface de l'enveloppe (24) du moyeu (18) et que ces languettes de fixation sont dotées d'engrènements radiaux.

5. Tête de coupe pour un dispositif motorisé de coupe de végétation selon la revendication 1, **caractérisée par le fait**
**que** les lames (22) sont fabriquées en matière plastique.

6. Tête de coupe pour un dispositif motorisé de coupe de végétation selon la revendication 1, **caractérisée par le fait**
**qu'**au moins deux éléments de fixation (26) sont disposés à l'intérieur (25) du moyeu (18).
